(19) Europäisches Patentamt
European Patent Office
Office européen des brevets

(11) **EP 2 456 100 A1**

(12) **EUROPEAN PATENT APPLICATION**

(43) Date of publication:
**23.05.2012 Bulletin 2012/21**

(51) Int Cl.:
***H04B 10/10*** (2006.01)

(21) Application number: **11180940.6**

(22) Date of filing: **12.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.11.2010 KR 20100116002**

(71) Applicant: **Pantech Co., Ltd**
**Mapo-gu, Seoul 121-270 (KR)**

(72) Inventor: **Lee, Yeon Moon**
**121-270 Seoul (KR)**

(74) Representative: **Herzog, Markus**
**Weickmann & Weickmann**
**Patentanwälte**
**Postfach 86 08 20**
**81635 München (DE)**

(54) **Apparatus and method for performing communication using chrominance information in visible light communication system**

(57)     In a transmission apparatus, a reception apparatus and a method for performing communication using chrominance information, a transmission apparatus includes a symbol converter to obtain a symbol from data; a symbol modulator to generate a chrominance value based on the symbol; a luminance controller to generate a luminance value; a color space converter to generate an RGB value based on the luminance value and the coordinate value; and a light emitting unit to emit light based on the RGB value. A reception apparatus includes a visible light receiver to receive light and to generate an electrical signal having RGB color information of the light; a color space converter to generate a luminance value and a chrominance value based on the RGB color information; a symbol demodulator to obtain a symbol based on the chrominance value; and a data converter to convert the symbol to data.

**FIG. 1**

**Description**

CROSS-REFERENCE TO RELATED APPLICATION

This application claims priority from and the benefit under 35 U.S.C. §119(a) of Korean Patent Application No. 10-2010-0116002, filed on November 22, 2018, which is incorporated by reference for all purposes as if fully set forth herein.

BACKGROUND

FIELD
The present disclosure relates to an apparatus and a method tor performing communication using chrominance information, and more particularly, to an apparatus and a method for transmitting and receiving data using chrominance information in a visible light communication system.
DISCUSSION OF THE BACKGROUND
Visible light communication technology is a wireless communication technology that transmits information using visible light. Visible light waves have wavelengths in the visible light wavelength band that may be recognized by a human eye. The visible light communication technology is distinguished from conventional wired optical communication technologies and an infrared wireless communication in an aspect of using visible light, and from a wired optical communication technology in an aspect of a wireless communication.
The visible light communication technology may be utilized without a regulation or permission for using frequency bands in comparison with widespread radio frequency (RF) wireless communication. Also, the visible light communication technology provides better physical security, and a communication link of visible light communication may be visually recognized by a user. In addition, the visible light communication technology has a characteristic as a convergence technology that may fulfill both an original purpose of providing lighting as a light source, and a communication process.
Meanwhile, some lighting devices using a Light Emitting Diode (LED) have a driving circuit, i.e., a LED driver to receive a control signal and power supply required for controlling brightness and colors of the LED. If a communication signal for visible light wireless communication is received by an LED device, strength-modulated light is emitted from the LED device. If an LED lighting device is used for visible light wireless communication, the LED lighting device provides light and performs a transmitter process of wireless communication.
There are several considerations to maintain lighting performance of an LED lighting device when the LED lighting device is used as a visible light communication device. For example, an anti-flicker capability, brightness control of the lighting of the LED lighting device, availability of a maximum brightness of the lighting, protection of an LED light source, and prevention of color variation may be considered. A flicker is a change in brightness of a light source that may be recognized by a human eye, and a flicker phenomenon may appear in a LED lighting device that emits strength-modulated light for visible light communication.
However, the flicker phenomenon may be harmful to a human eye and may cause psychological harm, thus the anti-flicker capability is desired for a lighting device. The other considerations besides the anti-flicker capability are mostly associated with brightness control of the lighting.

SUMMARY

Exemplary embodiments of the present invention provide an apparatus and a method for transmitting and receiving data using chrominance information in a visible light communication system.
Additional features of the invention will be set forth in the description which follows, and in part will be apparent from the description, or may be learned by practice of the invention.
An exemplary embodiment of the present invention discloses a transmission apparatus including a symbol converter to obtain a symbol from data; a symbol modulator to generate a chrominance value based on the symbol; a luminance controller to generate a luminance value; a color space converter to generate an RGB value based on the luminance value and the chrominance value; and a light emitting unit to emit light based on the RGB value.
An exemplary embodiment of the present invention discloses a reception apparatus including a visible light receiver to receive light and to generate an electrical signal having RGB color information of the light; a color space converter to generate a luminance value and a chrominance value based on the RGB color information; a symbol demodulator to obtain a symbol based on the chrominance value; and a data converter to convert the symbol to data.
An exemplary embodiment of the present invention discloses a method for transmitting data using chrominance information including converting data to a symbol; generating chrominance information based on a signal point corresponding to the symbol; generating a luminance value; generating red, green, and blue (RGB) values based on the luminance value and the chrominance information; converting the RGB values to an analog signal; and emitting visible light based on the analog signal.

An exemplary embodiment of the present invention discloses a method for receiving data using chrominance information including receiving visible light; generating an electrical signal having red, green, blue (RGB) color information based on the visible light; converting the electrical signal to a digital signal having RGB values corresponding to the RGB color information; generating a luminance value and a chrominance value based on the RGB values; obtaining a symbol based on the chrominance value; and converting the symbol to data.

It is to be understood that both the foregoing general description and the following detailed description are exemplary and explanatory and are intended to provide further explanation of the invention as claimed. Other features and aspects will be apparent from the following detailed description, the drawings, and the claims.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a transmission apparatus to transmit data using chrominance information in a visible light communication system according to an exemplary embodiment of the present invention.

FIG. 2 is a diagram illustrating a reception apparatus to receive data using chrominance information in a visible light communication system according to an exemplary embodiment of the present invention.

FIG. 3 is a flowchart illustrating a method for transmitting data using chrominance information according to an exemplary embodiment of the present invention.

FIG. 4 is a flowchart illustrating a method for receiving data using chrominance information according to an exemplary embodiment of the present invention.

FIG. 5 is a diagram illustrating a U-V plane in a YUV color space according to an exemplary embodiment of the present invention.

FIG. 6A is a diagram illustrating a constellation having four signal points on a U-V plane according to an exemplary embodiment of the present invention.

FIG. 6B is a diagram illustrating a constellation having four signal points on a I-Q plane according to an exemplary embodiment of the present invention.

FIG. 7 is a diagram illustrating a constellation having eight signal points on a U-V plane according to an exemplary embodiment of the present invention.

FIG. 8 is a diagram illustrating a constellation having sixteen signal points on a U-V plane according to an exemplary embodiment of the present invention.

FIGS. 9A through 9E are diagrams illustrating examples of applying constellation 4 CDSK (Correlation Delay Shift Keying) to a partial area of a U-V plane according to an exemplary embodiment of the present invention.

FIG. 10 is a diagram illustrating a method for determining a symbol corresponding to chrominance information of received visible light according to an exemplary embodiment of the present invention.

DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth herein. Rather, these exemplary embodiments are provided so that the present disclosure is thorough, and will fully convey the scope of the invention to those skilled in the art.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Exemplary embodiments of the present invention provide a transmission apparatus, a reception apparatus, and a method for performing transmission of data using a chrominance value in a visible light communication system.

Human vision has less spatial sensitivity to chrominance differences than luminance differences. Luminance may be referred to as 'luma' and represents the brightness in an image or achromatic portion of an image.

YUV is a color space that may be used as part of a color image pipeline. YUV is a standard representing a color like RGB. The RGB color model is an additive color model in which red, green, and blue light is added to reproduce various colors. The RGB color space defines signal information with respect to primary colors whereas the YUV is a color space defining signal information with respect to brightness and chrominance. More specifically, Y refers to luminance, U refers to Blue color-Y (B-Y), and V refers to a Red color-Y (R-Y). This color information such as U and V is called chrominance. Chrominance may be represented as two color-difference components, U and V, however it is not limited as such. A human eye is more sensitive to the change of Y component than to the change of U and V components.

In visible light spectrum distribution, green color (G) has high luminance, and a color component of the G is broadly distributed in the spectrum. Thus, a human eye may be more sensitive to the change of the G component. Accordingly, exemplary embodiments of the present invention provide a U-V plane that may minimize sensitivity for a human eye while locations of symbols are changing in the U-V plane.

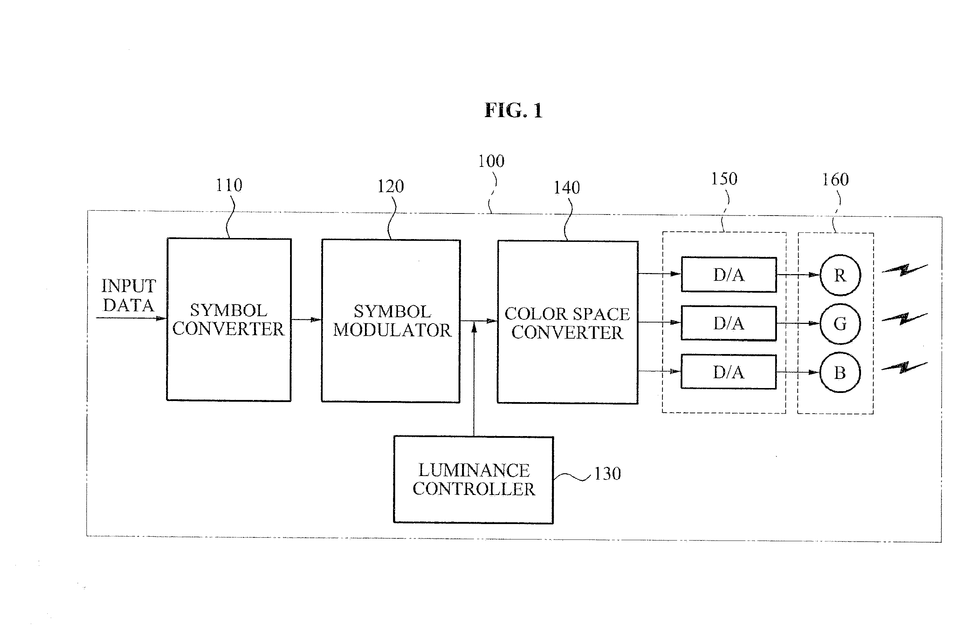

FIG. 1 is a diagram illustrating a transmission apparatus to transmit data using chrominance information in a visible light communication system according to an exemplary embodiment of the present invention.

As shown in FIG. 1, the transmission apparatus 100 may include a symbol converter 110, a symbol modulator 120, a luminance controller 130, a color space converter 140, a digital-to-analog (D/A) converter 150, and a light emitting unit 160.

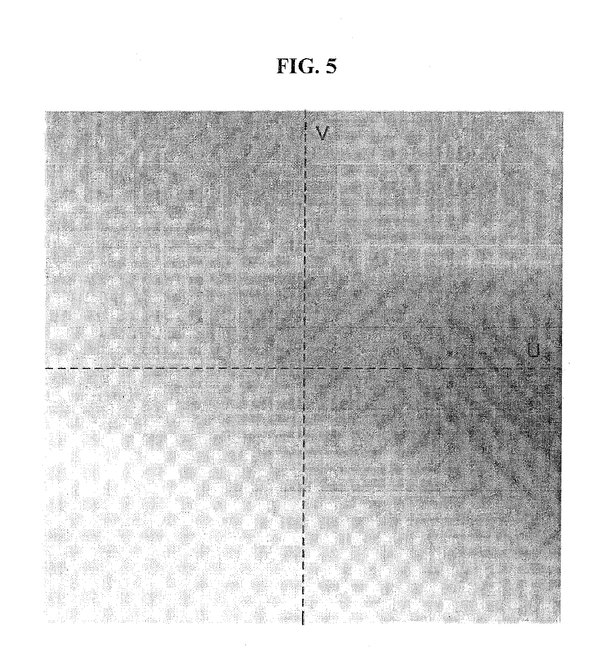

The symbol converter 110 may convert a bit stream of data to a symbol used for mapping the bit stream of the data on a U-V plane. The U-V plane may be represented as illustrated in FIG. 5.

FIG. 5 is a diagram illustrating a U-V plane in a YUV color space according to an exemplary embodiment of the present invention.

The YUV is a color space represented by luminance information and chrominance information, and the U-V plane is a two-dimensional plane defined by two chrominance values, a U value and a V value. Referring to FIG. 5, the U value is indicated as an x-coordinate value, and the V value is indicated as a y-coordinate value. When the luminance value, Y, is 0.5, an example of U-V plane is depicted in FIG. 5. Large portions of quadrant I of the U-V plane display purple. Large portions of quadrant II, the quadrant III, and the quadrant IV of the U-V plane display red, green, and blue, respectively. The chrominance information may include a coordinate of a chrominance plane, or a chrominance value such as the U value, and the V value.

The symbol modulator 120 may perform mapping of the symbol converted by the symbol converter 110 on a signal point of the U-V plane using a determined constellation of the symbol, and may output a U-V coordinate value of the signal point corresponding to the symbol. The determined constellations in the transmission apparatus 100 and a reception apparatus 200 may be inverses of each other. Thus, a symbol may be mapped into a coordinate value by the transmission apparatus 100, the coordinate value may be demapped into the symbol by the reception apparatus 200. A constellation may refer to a fixed group of signal points in communication systems. The signal points may include matching symbol information and signal points information. However, throughout the specification, a constellation may be a signal point in a chrominance plane, a coordinate value of the signal point in a chrominance plane, or chrominance information of each symbol in a chrominance plane such as U, V, I, and Q values.

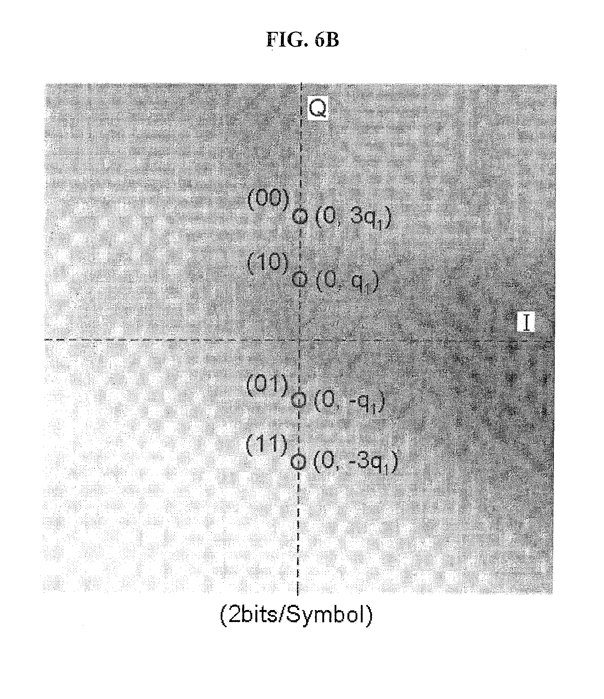

The symbol modulator 120 may modulate the symbol based on a U-V plane of a YUV, however, the modulation of the symbol may not be limited to the U-V plane of the YUV. The modulation of the symbol may be performed using any color space represented with luminance and chrominance information. The modulation of the symbol may also be performed using chrominance information of YIQ. The YIQ is the color space used by the NTSC color TV system. I stands for in-phase, and Q stands for quadrature, referring to the components used in quadrature modulation. I and Q represent chrominance information. An example of an I-Q plane of the YIQ color space is illustrated in FIG. 6B.

That is, the U-V plane may be one type of color space on which chrominance information is represented as a two-dimensional plane among color space standards represented by luminance information and chrominance information. The YIQ color space may be a plane represented with red and blue colors.

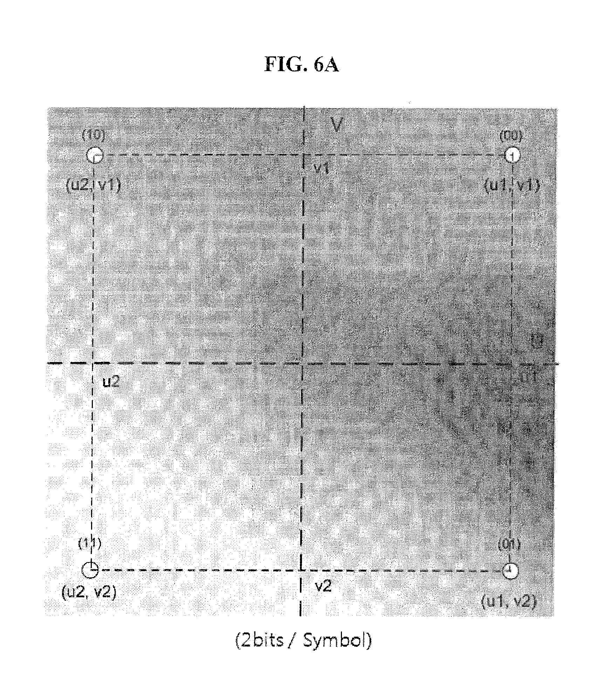

The determined constellation of the symbol showing a coordinate of a signal point correspond to the symbol may be represented as illustrated in FIG. 6, FIG. 7, and FIG. 8 according to the size of the symbol.

FIG. 6A is a diagram illustrating a constellation having four signal points on a U-V plane according to an exemplary embodiment of the present invention.

Referring to FIG. 6A, a constellation of a 2-bit symbol may be represented by four signal points corresponding to four different symbols, respectively. As shown in FIG. 6A, the constellation of the 2-bit symbols may be represented by four coordinates including a U value and a V value on a two-dimensional U-V plane. The four coordinates (u1, v1), (u2, v1), (u1, v2), and (u2, v2), the four signal points on each corner of the U-V plane, may be represented as symbols (00), (10), (01), and (11), respectively. The constellation of the 2-bit symbol may be used to obtain a U value and a V value with respect to the symbol by the symbol modulator 120.

FIG. 6B is a diagram illustrating a constellation having four signal points on a I-Q plane according to an exemplary embodiment of the present invention.

Referring to FIG. 6B, a constellation of a 2-bit symbol may be represented by four signal points corresponding to four different symbols, respectively. As shown in FIG. 6B, the constellation of the 2-bit symbols may be represented by four coordinates including an I value and a Q value on a two-dimensional I-Q plane. The four coordinates (0, 3ql), (0, q1), (0, -q1), and (0, -3q1), the four signal points or the constellation of the I-Q plane, may be represented as symbols (00), (10), (01), and (11), respectively. The constellation of the 2-bit symbol may be used to obtain an I value and a Q value with respect to the symbol by the symbol modulator 120.

In the YIQ color space, a human eye is more sensitive to changes in the red-blue range ("I range") than in the purple-green range ("Q range"). Thus, if signal points are arranged vertically, for example, the signal points have the same I values and different Q values as shown in FIG. 6B, a human eye may not notice the difference. In this instance, better lighting may be provided during visible light communication. If signal points are arranged horizontally, for example, the signal points have the same Q values and different I values, the visible light communication may be more noise-resistant because blue color and red color are less associated with each other in visible light spectrum.

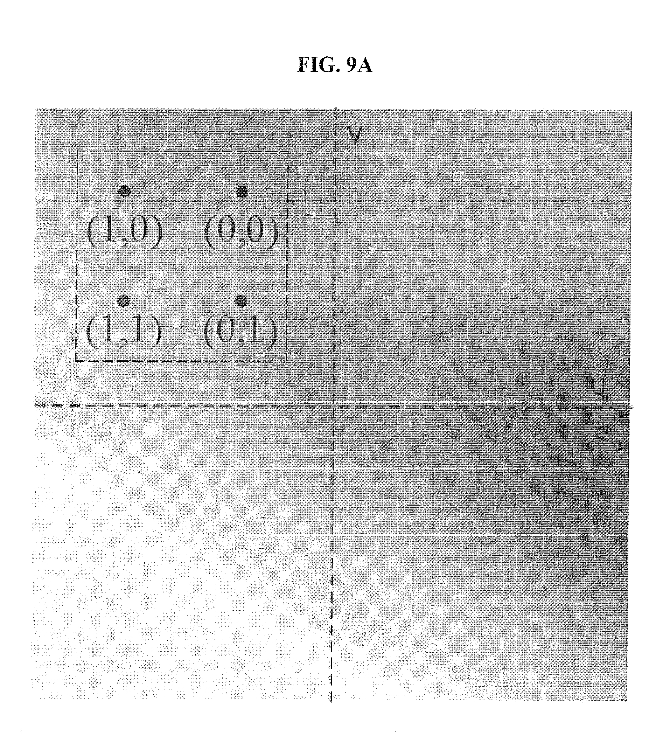

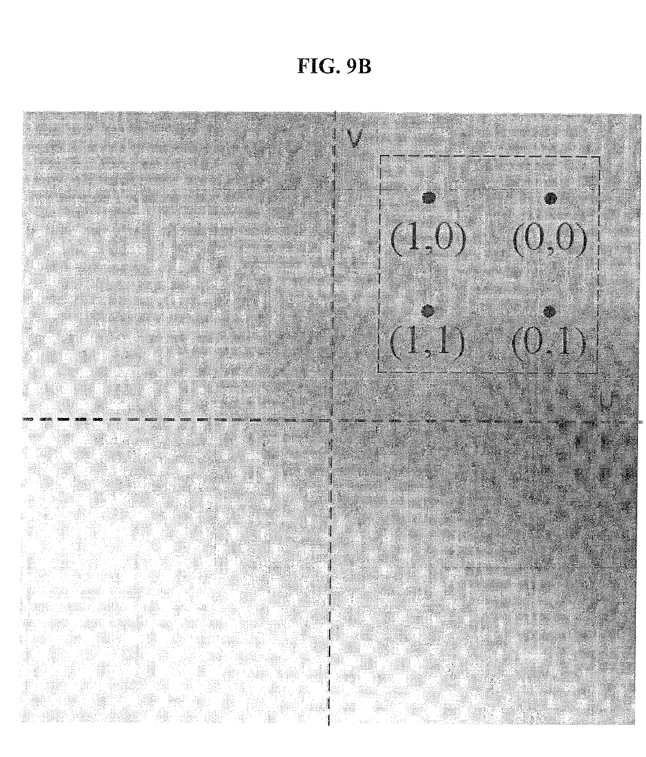

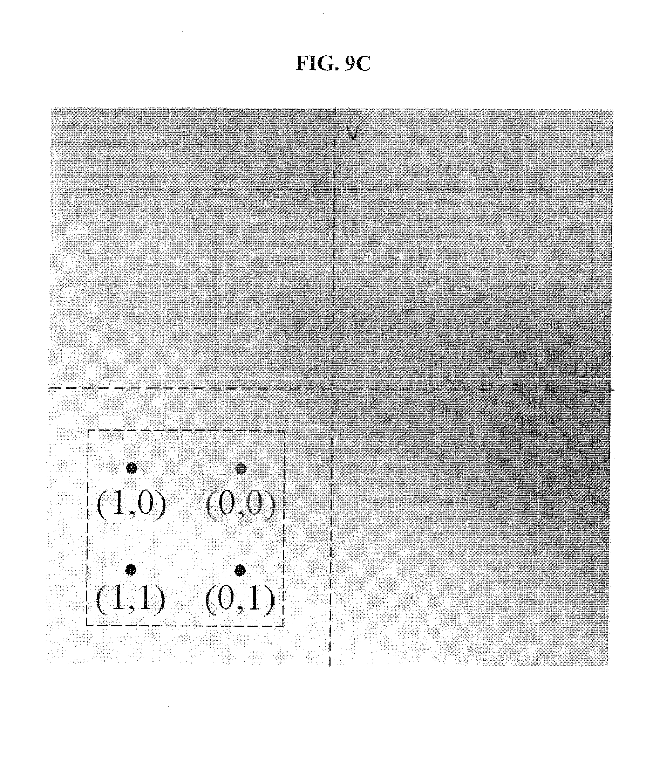

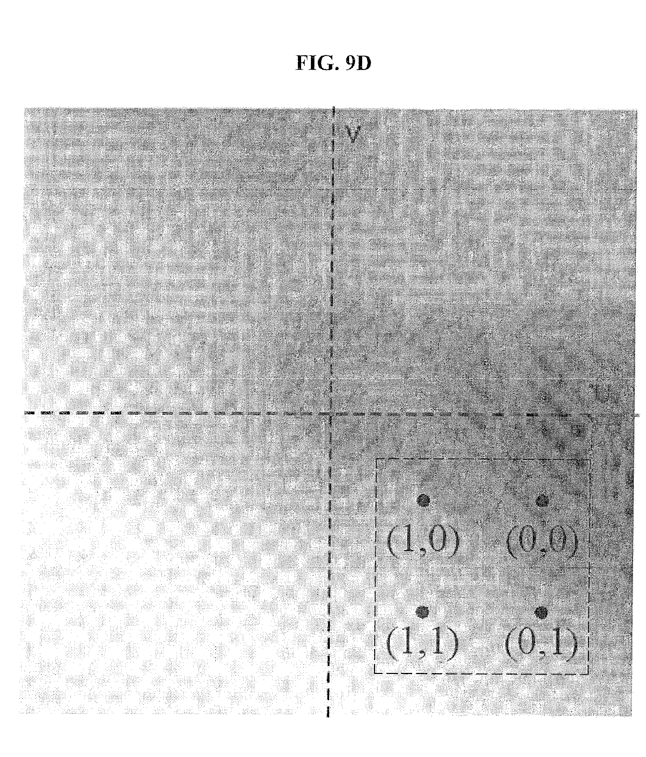

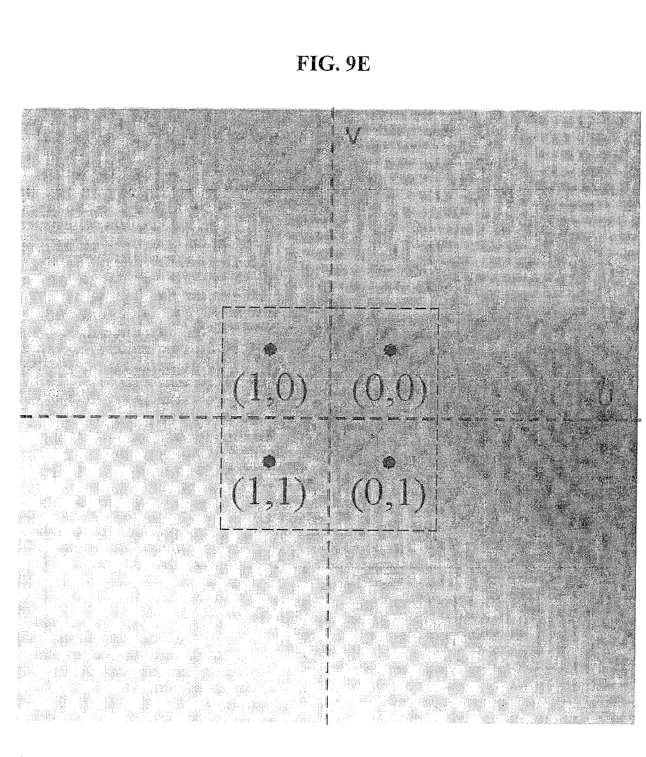

In the same way, if signal points are arranged along the red-blue range in the U-V plane, visible light communication may be more noise-resistant because blue color and red color are less associated with each other in visible light spectrum. For example, signal points of the U-V plane in FIG. 6A may be arranged along the line of which the slope is -1 to be more noise-resistant in comparison with signal points illustrated in FIGS. 9A through 9E.

The constellation may be changed according to communication environment. If visible communication error occurs frequently due to noise, the constellations of a transmission apparatus and a reception apparatus may be changed into relatively more noise-resistant constellation. If visible communication error does not occur frequently, the constellations of a transmission apparatus and a reception apparatus may be changed such that the chrominance differences among the signal points are less sensitive to a human eye.

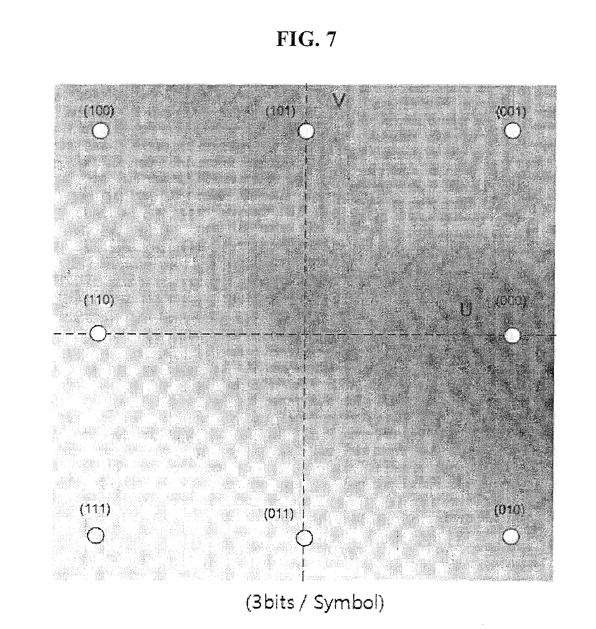

FIG. 7 is a diagram illustrating a constellation having eight signal points on a U-V plane according to an exemplary embodiment of the present invention.

Referring to FIG. 7, a constellation of a 3-bit symbol may be represented by eight signal points corresponding to eight different symbols, respectively.

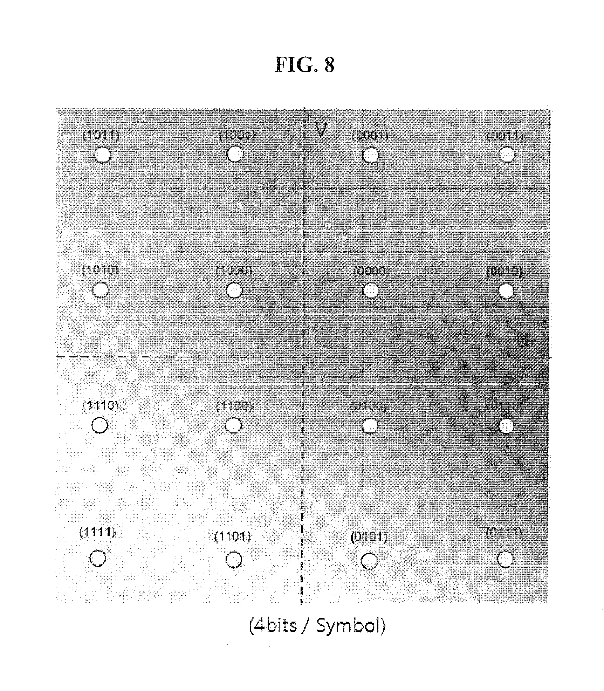

FIG. 8 is a diagram illustrating a constellation having sixteen signal points on a U-V plane according to an exemplary embodiment of the present invention.

Referring to FIG. 8, a constellation of a 4-bit symbol may be represented by sixteen signal points corresponding to sixteen different symbols, respectively.

The symbol modulator 120 may generate the constellation of the symbol using only a partial area of the U-V plane for a user who is sensitive to chrominance change. The partial area of the U-V plane is an area where the user may not recognize chrominance differences with an eye of the user. The examples of the partial area of the U-V plane are illustrated in FIGS. 9A through 9E.

FIGS. 9A through 9E are diagrams illustrating examples of applying constellation 4 CDSK (Correlation Delay Shift Keying) to a partial area of a U-V plane according to an exemplary embodiment of the present invention.

FIGS. 9A through 9E are examples of generated constellations of a symbol in an area where a user may not recognize chrominance differences with an eye of the user.

The luminance controller 130 may generate a luminance value of Y. The luminance value generated by the luminance controller 130 may be used to maintain a constant luminance value for a color signal.

The color space converter 140 may generate red, green, and blue (RGB) values using the Y value generated by the luminance controller 130 and the U-V coordinate values including a U value and a V value generated by the symbol modulator 120. In an example, the YUV-to-RGB conversion may be performed according to the following equation, Equation 1:

[Equation 1]

$$R = Y + 1.402V$$

$$G = Y - 0.344U - 0.714V$$

$$B = Y + 1.772V$$

With reference to FIG. 1, the D/A converter 150 may convert each of the RGB values generated in the color space converter 140 to an analog signal. The D/A converter 150 may include three digital-to-analog converters for R, G, and B values which represent for red, green and blue color, respectively. Each of the RGB values may be converted to a separate analog signal or an RGB value may be converted to an analog signal having RGB color information. The RGB value may mean a value including a red (R) value, a green (G) value and a blue (B) value or may mean each of RGB values, that is, R value, G value, and B value.

The light emitting unit 160 may emit visible light for each color based on the analog signal transmitted from the D/A converter 150.

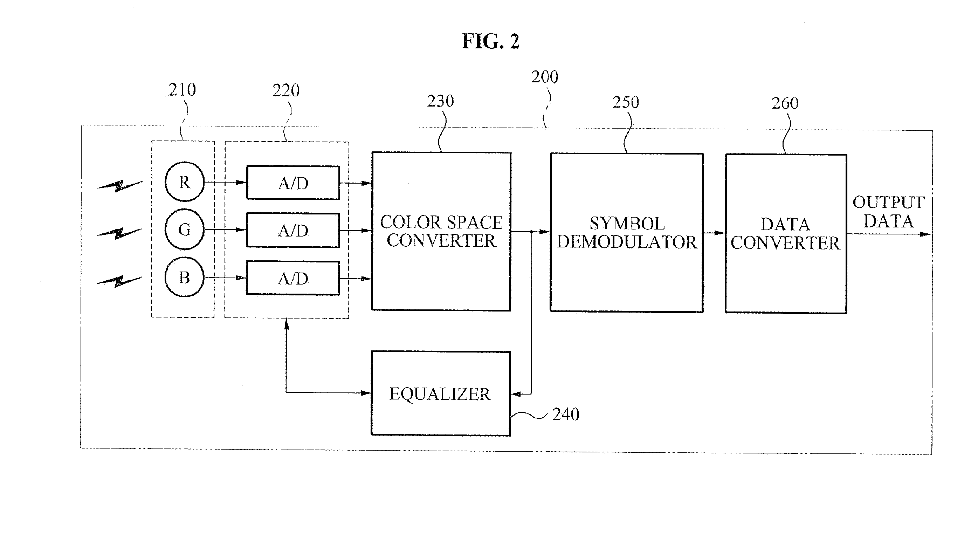

FIG. 2 is a diagram illustrating a reception apparatus to receive data using chrominance information in a visible light communication system according to an exemplary embodiment of the present invention.

As shown in FIG. 2, the reception apparatus 200 may include a visible light receiver 210, an analog-to-digital (A/D) converter 220, a color space converter 230, an equalizer 240, a symbol demodulator 250, and a data converter 260.

The visible light receiver 210 may receive a visible light signal of RGB and convert the visible light signal to an electrical signal for each of RGB colors. The visible light receiver 210 may include a photo diode, an image sensor, and the like. The visible light receiver 210 may include three sensors to sense red, green, and blue colors, respectively.

The A/D converter 220 may convert the electrical signal converted in the visible receiver 210 to a digital signal for each of RGB colors. The A/D converter 220 may include three analog-to-digital converters for R, G, and B values which represent for red, green and blue.

The color space converter 230 may convert the digital signal of RGB colors converted by the A/D converter 220 to a YUV value. The digital signal of RGB colors may include an RGB value. The RGB-to-YUV conversion may be performed according to the following equation, Equation 2:

[Equation 2]

$$Y = 0.299R + 0.587G + 0.114B$$
$$U = 0.564 \ (B - Y)$$
$$V = 0.713 \ (R - Y)$$

The equalizer 240 may control the digital signal outputted from the A/D with the Y value outputted from the color space converter 230. Further, the equalizer 240 may control the electrical signal for each of RGB colors outputted from the visible light receiver 210 with the Y value outputted from the color space converter 230. For example, if the Y value is higher than a reference value, the equalizer 240 may reduce a value of the RGB signal outputted from the A/D converter 220. If the Y value is lower than the reference value, the equalizer 240 may increase a value of the RGB signal outputted from the A/D converter 220. For example, the RGB values may be scaled up or down to regulate the Y value. Then, the U value and the V value may be controlled according to the equation 2. The reference value for Y may be determined with reference to the Y value of the luminance controller 130 of the transmission apparatus 100.

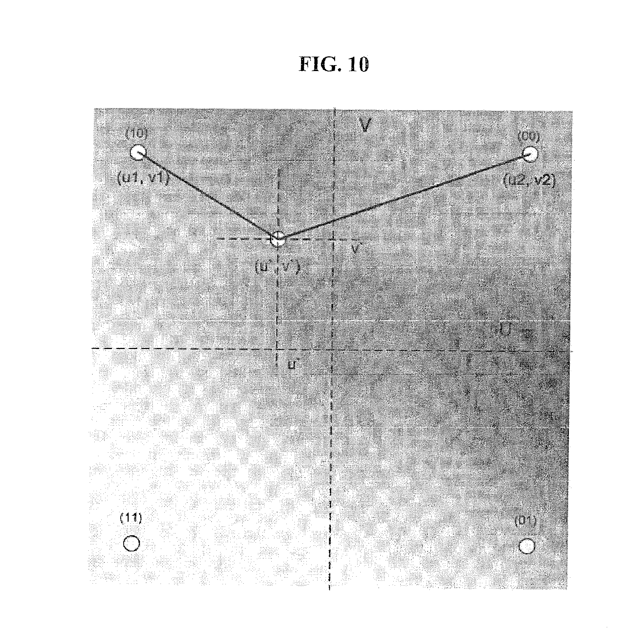

The symbol demodulator 250 may perform demapping of the obtained chrominance values, U and V values, at the nearest signal point based on the U value and the V value converted by the color space converter 230, and output a symbol corresponding to the demapped signal point. Hereinafter, an example of demapping in the symbol demodulator 250 will be described with reference to FIG. 10.

FIG. 10 is a diagram illustrating a method for determining a symbol corresponding to chrominance information of received visible light according to an exemplary embodiment of the present invention.

Information received by the visible light receiver 210 may not correspond to information transmitted from the transmission apparatus 100 due to noise. For example, some signal points on a U-V plane of the transmission apparatus 100 are defined as (U1, V1) and (U2, V2), and acquired U and V values of a signal, transmitted from the transmission apparatus 100, on a U-V plane of the reception apparatus 200 may be defined as (U', V').

The symbol demodulator 250 may determine the nearest signal point from the obtained U and V values (U', V') among signal points (U1, V1) and (U2, V2), and may determine the signal point (U1, V1 ) which is closer to (U', V') than the signal point (U2, V2) as a corresponding signal point. The transmission apparatus 100 and the reception apparatus 200 may have determined signal points, such as (U1, V1) and (U2, V2), by sharing symbol mapping information.

The data converter 260 may convert the symbol outputted from the symbol converter 250 into corresponding data.

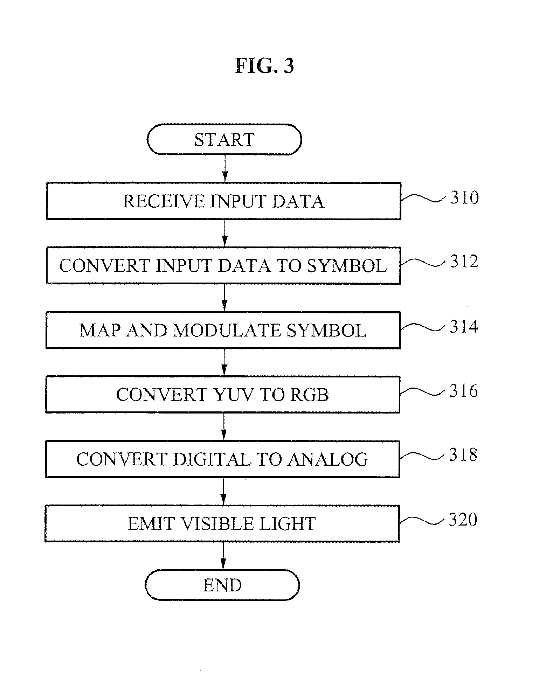

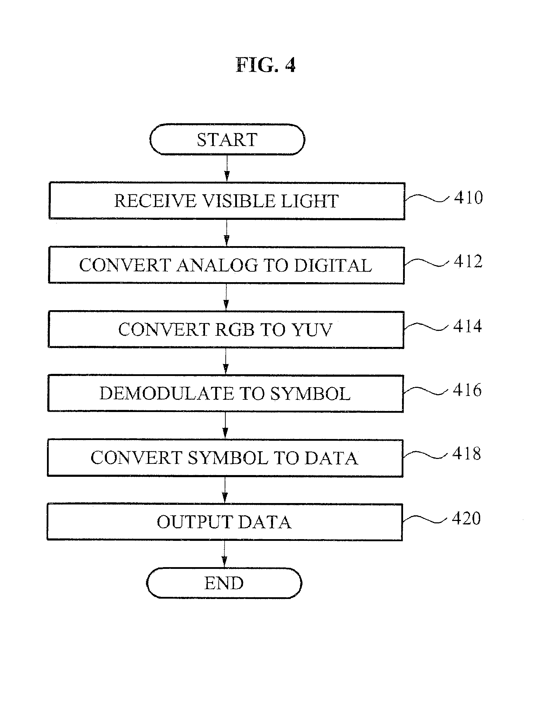

Hereinafter, a method for transmitting and receiving data using chrominance information in a visible light communication system will be described with reference to FIG. 3 and FIG. 4.

FIG. 3 is a flowchart illustrating a method for transmitting data using chrominance information according to an exemplary embodiment of the present invention.

Referring to FIG. 3, a transmission apparatus may receive input data in operation 310. Then, the transmission apparatus may convert the input data to a symbol to map the input data on a U-V plane in operation 312.

In operation 314, the transmission apparatus may map the symbol at a signal point of the U-V plane and modulate the symbol by generating a coordinate value of the U-V plane having a U value and a V value corresponding to the signal point of the symbol.

In operation 316, the transmission apparatus may generate a luminance value Y, and may convert the Y value, the U value, and the V value to a digital RGB signal. The value of the luminance value Y may be determined to maintain a constant luminance value of output visible light.

In operation 318, the transmission apparatus may convert the digital RGB signal to analog signal. In operation 320, the transmission apparatus may emit visible light for each RGB color based on the analog signal for each of the RGB colors.

FIG. 4 is a flowchart illustrating a method for receiving data using chrominance information according to an exemplary embodiment of the present invention.

Referring to FIG. 4, a reception apparatus may receive visible light of RGB and convert the visible light to an electrical signal for each of the RGB colors, in operation 410. The visible light of RGB may be sensed by three image sensors for sensing each of the RGB colors.

In operation 412, the reception apparatus may convert the electrical signal ("analog signal") to a digital signal for each RGB colors. In operation 414, the reception apparatus may convert the digital signal of RGB to YUV values.

In operation 416, the reception apparatus may demap chrominance value at the nearest signal point based on the U value and the V value, and demodulate the demapped signal point to a symbol corresponding to the demapped signal point. In operation 418, the reception apparatus may convert the symbol to corresponding data. The reception apparatus may output the data in operation 420.

The exemplary embodiments according to aspects of the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

In an apparatus and a method for performing communication using chrominance information, each symbol of data may be represented as a constellation in a chrominance plane. Multiple symbols may be distinguished from each other by chrominance information of red color and chrominance information of blue color while maintaining a constant or similar luminance value. The data modulated by using chrominance information of blue color and chrominance information of red color may be noise-resistant, because blue color and red color is less associated with each other in the visible light spectrum. In addition, a flicker phenomenon may be reduced by reducing changes of luminance value of the visible light while transmitting data using the constellation in the chrominance plane.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

In a transmission apparatus, a reception apparatus and a method for performing communication using chrominance information, a transmission apparatus includes a symbol converter to obtain a symbol from data; a symbol modulator to generate a chrominance value based on the symbol; a luminance controller to generate a luminance value; a color space converter to generate an RGB value based on the luminance value and the coordinate value; and a light emitting unit to emit light based on the RGB value. A reception apparatus includes a visible light receiver to receive light and to generate an electrical signal having RGB color information of the light; a color space converter to generate a luminance value and a chrominance value based on the RGB color information; a symbol demodulator to obtain a symbol based on the chrominance value; and a data converter to convert the symbol to data.

**Claims**

**1.** A transmission apparatus, comprising:

a symbol converter adapted to obtain a symbol from data;
a symbol modulator adapted to generate a chrominance value based on the symbol;

a luminance controller adapted to generate a luminance value;
a color space converter adapted to generate an RGB value based on the luminance value and the chrominance value; and
a light emitting unit adapted to emit light based on the RGB value.

2. The transmission apparatus of claim 1, wherein the symbol modulator is adapted to map the symbol at a signal point of a chrominance plane, and to generate a coordinate value of the signal point as the chrominance value.

3. The transmission apparatus of claim 2, wherein the chrominance plane is a two-dimensional plane having chrominance information, and
the chrominance information comprises the coordinate value comprised of two types of chrominance values.

4. The transmission apparatus of claim 2 or 3, wherein the chrominance plane is a U-V plane of a YUV color space or an I-Q plane of a YIQ color space,
wherein, preferably, the I-Q plane comprises multiple signal points having an I value and a Q value as the coordinate value, differences among the Q values of the multiple signal points being smaller than differences among the I values of the multiple signal points, and the symbol being mapped at a signal point among the multiple signal points.

5. The transmission apparatus of any of claims 2 to 4, wherein the symbol modulator comprises a constellation having coordinate values of multiple signal points in the chrominance plane,
the symbol is mapped at a corresponding signal point among the multiple signal points, and
wherein, preferably, the constellation is determined in an area of the chrominance plane, and differences among chrominance values of signal points in the area are less sensitive to a human eye than differences among chrominance values of signal points in at least one other area of the chrominance plane.

6. The transmission apparatus of any of claims 2 to 5, wherein the symbol modulator comprises a constellation having coordinate values of multiple signal points of the chrominance plane,
each of the multiple signal points corresponds to a symbol, and
a number of the multiple signal points is a power of two.

7. The transmission apparatus of any of claims 1 to 6, further comprising:

a digital-to-analog (D/A) converter adapted to convert the RGB value to an analog signal having RGB color information corresponding to the RGB value,

wherein the light emitting unit emits the light based on the analog signal.

8. A reception apparatus, comprising:

a visible light receiver adapted to receive light and to generate an electrical signal having RGB color information of the light;
a color space converter adapted to generate a luminance value and a chrominance value based on the RGB color information;
a symbol demodulator adapted to obtain a symbol based on the chrominance value; and
a data converter adapted to convert the symbol to data.

9. The reception apparatus of claim 8, wherein the symbol demodulator is adapted to demap the chrominance value at a signal point of a chrominance plane among determined signal points, and obtains the symbol corresponding to the signal point.

10. The reception apparatus of claim 9, wherein the chrominance plane is a two-dimensional plane having chrominance information, and
the chrominance information comprises a coordinate value comprised of two types of chrominance values.

11. The reception apparatus of claim 9 or 10, wherein the chrominance plane is a U-V plane of a YUV color space or an I-Q plane of a YIQ color space.

12. The reception apparatus of any of claims 9 to 11, further comprising:

an equalizer adapted to control the electrical signal or the digital signal based on the luminance value, the equalizer preferably being adapted to control at least one of

● the signal strength of the electrical signal based on the luminance value to regulate the luminance value,
● the RGB value of the digital signal based on the luminance value to regulate the luminance value, and
● the electrical signal or the digital signal with reference to a reference luminance value generated by a luminance controller of a transmission apparatus.

13. The reception apparatus of any of claims 8 to 12, further comprising:

an analog-to-digital (A/D) converter adapted to convert the electrical signal to a digital signal having an RGB value corresponding to the RGB color information,

wherein the color space converter generates the luminance value and the chrominance value based on the RGB value.

14. A method for transmitting data using chrominance information, comprising:

converting data to a symbol;
generating chrominance information based on a signal point corresponding to the symbol;
generating a luminance value;
generating red, green, and blue (RGB) values based on the luminance value and the chrominance information;
converting the RGB values to an analog signal; and
emitting visible light based on the analog signal.

15. The method of claim 14, wherein the generating of the chrominance information comprises:

mapping the symbol at the signal point based on a constellation; and
generating a coordinate value of the signal point as the chrominance information,

wherein the constellation comprises mapping information between the symbol and the signal point, and
the signal point is a coordinate in a chrominance plane.

16. A method for receiving data using chrominance information, comprising:

receiving visible light;
generating an electrical signal having red, green, blue (RGB) color information based on the visible light;
converting the electrical signal to a digital signal having RGB values corresponding to the RGB color information;
generating a luminance value and a chrominance value based on the RGB values;
obtaining a symbol based on the chrominance value; and
converting the symbol to data.

17. The method of claim 16, wherein the obtaining of the symbol comprises:

obtaining a coordinate value corresponding to the chrominance value from a chrominance plane;
obtaining information of signal points based on a constellation;
demapping the chrominance value at a nearest signal point among the signal points based on the coordinate value; and
obtaining a symbol corresponding to the nearest signal point,

wherein the constellation comprises demapping information between the symbol and the nearest signal point.

**FIG. 1**

**FIG. 2**

**FIG. 3**

```
            ┌──────────────┐
            │    START     │
            └──────────────┘
                   │
                   ▼
   ┌─────────────────────────────────┐
   │      RECEIVE INPUT DATA          │ ～ 310
   └─────────────────────────────────┘
                   │
                   ▼
   ┌─────────────────────────────────┐
   │   CONVERT INPUT DATA TO SYMBOL   │ ～ 312
   └─────────────────────────────────┘
                   │
                   ▼
   ┌─────────────────────────────────┐
   │     MAP AND MODULATE SYMBOL      │ ～ 314
   └─────────────────────────────────┘
                   │
                   ▼
   ┌─────────────────────────────────┐
   │        CONVERT YUV TO RGB        │ ～ 316
   └─────────────────────────────────┘
                   │
                   ▼
   ┌─────────────────────────────────┐
   │    CONVERT DIGITAL TO ANALOG     │ ～ 318
   └─────────────────────────────────┘
                   │
                   ▼
   ┌─────────────────────────────────┐
   │        EMIT VISIBLE LIGHT        │ ～ 320
   └─────────────────────────────────┘
                   │
                   ▼
            ┌──────────────┐
            │     END      │
            └──────────────┘
```

**FIG. 4**

```
                    ┌──────────────┐
                    │    START     │
                    └──────┬───────┘
                           │
                           ▼
        ┌────────────────────────────────────┐
        │       RECEIVE VISIBLE LIGHT         │ ～ 410
        └──────────────────┬─────────────────┘
                           │
                           ▼
        ┌────────────────────────────────────┐
        │      CONVERT ANALOG TO DIGITAL      │ ～ 412
        └──────────────────┬─────────────────┘
                           │
                           ▼
        ┌────────────────────────────────────┐
        │        CONVERT RGB TO YUV           │ ～ 414
        └──────────────────┬─────────────────┘
                           │
                           ▼
        ┌────────────────────────────────────┐
        │      DEMODULATE TO SYMBOL           │ ～ 416
        └──────────────────┬─────────────────┘
                           │
                           ▼
        ┌────────────────────────────────────┐
        │      CONVERT SYMBOL TO DATA         │ ～ 418
        └──────────────────┬─────────────────┘
                           │
                           ▼
        ┌────────────────────────────────────┐
        │           OUTPUT DATA              │ ～ 420
        └──────────────────┬─────────────────┘
                           │
                           ▼
                    ┌──────────────┐
                    │     END      │
                    └──────────────┘
```

FIG. 5

**FIG. 6A**

(2bits / Symbol)

**FIG. 6B**

(2bits/Symbol)

FIG. 7

(3bits / Symbol)

FIG. 8

(4bits / Symbol)

**FIG. 9A**

**FIG. 9B**

**FIG. 9C**

**FIG. 9D**

**FIG. 9E**

FIG. 10

Europäisches
Patentamt

European
Patent Office

Office européen
des brevets

# EUROPEAN SEARCH REPORT

Application Number

EP 11 18 0940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/136312 A1 (KONINKL PHILIPS ELECTRONICS NV [NL]; SCHENK TIM C W [NL]; FERI LORENZO) 12 November 2009 (2009-11-12) * page 1, lines 2-9 * * page 2, lines 6-9 * * page 2, lines 21-24 * * page 4, lines 9-20 * * page 5, line 14 - page 7, line 30 * * page 8, lines 26-2 * * figures 1,2,3,4 * ----- | 1-17 | INV. H04B10/10 |
| X | US 2010/247112 A1 (CHANG SOO-YOUNG [US]) 30 September 2010 (2010-09-30) * figures 4,20-31 * * paragraph [0001] * * paragraph [0008] * * paragraphs [0014] - [0017] * * paragraph [0021] * * paragraphs [0024] - [0025] * * paragraph [0027] * * paragraph [0157] * * paragraphs [0160] - [0164] * * paragraphs [0181] - [0195] * * paragraphs [0209] - [0217] * * paragraph [0220] * * paragraph [0228] * * paragraphs [0256] - [0262] * ----- | 1-17 | |
| X | US 2010/135673 A1 (SON JAE-SEUNG [KR] ET AL) 3 June 2010 (2010-06-03) * figures 3,4,7 * * paragraph [0002] * * paragraphs [0006] - [0008] * * paragraph [0033] * * paragraphs [0056] - [0065] * ----- -/-- | 1-17 | |

TECHNICAL FIELDS
SEARCHED (IPC)

H04B

The present search report has been drawn up for all claims

| Place of search | Date of completion of the search | Examiner |
|---|---|---|
| Munich | 9 February 2012 | Petitit, Nicolas |

EPO FORM 1503 03.82 (P04C01)

| | Europäisches Patentamt European Patent Office Office européen des brevets | **EUROPEAN SEARCH REPORT** | Application Number EP 11 18 0940 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 136 484 A1 (SAMSUNG ELECTRONICS CO LTD [KR]) 23 December 2009 (2009-12-23)<br>* paragraphs [0025] - [0041] *<br>* paragraphs [0064] - [0065] *<br>* figures 1,2,3,4A *<br>----- | 1-17 | |
| | | | **TECHNICAL FIELDS SEARCHED (IPC)** |

The present search report has been drawn up for all claims

| Place of search | Date of completion of the search | Examiner |
|---|---|---|
| Munich | 9 February 2012 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 0940

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2012

| Patent document cited in search report | | Publication date | Patent family member(s) | | Publication date |
|---|---|---|---|---|---|
| WO 2009136312 | A1 | 12-11-2009 | CN | 102017472 A | 13-04-2011 |
| | | | EP | 2289179 A1 | 02-03-2011 |
| | | | JP | 2011521546 A | 21-07-2011 |
| | | | US | 2011044701 A1 | 24-02-2011 |
| | | | WO | 2009136312 A1 | 12-11-2009 |
| US 2010247112 | A1 | 30-09-2010 | US | 2010247112 A1 | 30-09-2010 |
| | | | WO | 2010114863 A1 | 07-10-2010 |
| US 2010135673 | A1 | 03-06-2010 | KR | 20100059737 A | 04-06-2010 |
| | | | US | 2010135673 A1 | 03-06-2010 |
| EP 2136484 | A1 | 23-12-2009 | CN | 101682420 A | 24-03-2010 |
| | | | EP | 2136484 A1 | 23-12-2009 |
| | | | JP | 2008252570 A | 16-10-2008 |
| | | | KR | 20100014737 A | 10-02-2010 |
| | | | US | 2010034540 A1 | 11-02-2010 |
| | | | WO | 2008129742 A1 | 30-10-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100116002